# EUROPÄISCHE PATENTANMELDUNG

(11) **EP 2 055 422 A1**
(43) Veröffentlichungstag der Anmeldung: **06.05.2009**
(21) Anmeldenummer: 08167419.4
(22) Anmeldetag: 23.10.2008
(51) Int. Cl.: B23K 20/12, B23K 20/16, B23P 6/00, F01D 5/00

(54) **Verfahren zum Linearen Reibfügen von Bauteilen unter Verwendung eines Fügeteils**

(30) Priorität: 29.10.2007 DE 102007051577
(71) Anmelder: MTU Aero Engines GmbH, 80995 München (DE)
(72) Erfinder: Bamberg, Joachim, 85221, Dachau (DE); Schneefeld, Dieter, 85253, Walkertshofen (DE); Helm, Dietmar, 80757, Karlsfeld (DE); Satzger, Wilhelm, 80804, München (DE)

(57) **Zusammenfassung**

Die Erfindung betrifft ein Verfahren zum Fügen von Bauteilen (10,12), insbesondere zum Fügen einer Laufschaufel (10) an einen Rotorgrundkörper (12) bei der Herstellung und/oder Reparatur eines integral beschaufelten Gasturbinenrotors, wobei zwei miteinander zu verbindende bzw. aneinander zu fügende Bauteile (10,12) und ein Fügeteil (13) bereitgestellt werden, wobei die beiden miteinander zu verbindenden Bauteile (10,12) und das Fügeteil (13) derart zueinander ausgerichtet werden, dass das Fügeteil (13) als Einsatz zwischen den beiden miteinander zu verbindenden Bauteilen (10,12) angeordnet ist, und wobei die beiden Bauteile unter Zwischenanordnung des Fügeteils (13) dadurch miteinander verbunden werden, dass das Fügeteil (13) gegenüber den beiden miteinander zu verbindenden, stillstehenden Bauteilen (10,12) zur Bereitstellung einer Reibbewegung linear hin-und herbewegt wird. Das Fügeteil (13) wird zusätzlich eine Stauchkraft (15) auf die Fügezonen zwischen den beiden stillstehenden Bauteilen (10,12) und dem Fügeteil (13) ausgeübt, nämlich in einer in etwa senkrecht zur Reibbewegung verlaufenden Richtung.

## Beschreibung

Die Erfindung betrifft ein Verfahren zum Fügen von Bauteilen, insbesondere zum Fügen einer Laufschaufel an einen Rotorgrundkörper bei der Herstellung oder Reparatur eines integral beschaufelten Gasturbinenrotors.

Bei der Fertigung von Gasturbinen ist das Reibschweißen ein weitverbreitetes Fügeverfahren. Das Reibschweißen gehört zu den sogenannten Pressschweißverfahren, wobei man beim Reibschweißen unter anderem zwischen dem sogenannten linearen Reibschweißen, dem sogenannten Rotationsreibschweißen und dem sogenannten Rührreibschweißen unterscheidet. Beim Reibschweißen werden Bauteile durch Reibung aneinander gefügt bzw. miteinander verbunden. Beim linearen Reibschweißen wird ein Bauteil translatorisch hin- und herbewegt, wohingegen das andere Bauteil stillsteht und mit einer bestimmten Kraft gegen das bewegte Bauteil gedrückt wird. Hierbei passen sich Fügeflächen der miteinander zu verbindenden Bauteile durch Warmverschmieden aneinander an.

Bei der aus dem Stand der Technik bekannten Vorgehensweise zum Verbinden bzw. Fügen von Bauteilen über lineares Reibschweißen werden zwei miteinander zu verbindende Bauteile direkt aneinander gerieben, wobei ein Bauteil translatorisch hin- und herbewegt wird und vorzugsweise über das andere Bauteil ein definierter Stauchdruck auf die Fügefläche zwischen den beiden Bauteilen ausgeübt wird. Werden die beiden miteinander zu verbindenden Bauteile direkt aneinander gerieben, so sind komplexe Klemmvorrichtungen insbesondere am bewegten Bauteile erforderlich. Es kann zu Verformungen an den miteinander zu verbindenden Bauteilen kommen. Des weiteren entstehen bei der Reibbewegung der miteinander zu verbindenden Bauteile freie Fügeflächen im Bereich der Fügezone, die einer möglichen Kontaminierung, zum Beispiel mit Sauerstoff, aufgesetzt sind. Hierdurch kann die Qualität der Fügeverbindung beeinträchtigt werden. Weiterhin muss bei der aus dem Stand der Technik bekannten Vorgehensweise des linearen Reibschweißens am Ende des Schweißvorgangs das linear hin- und herbewegte Bauteil in seiner Amplitude auf Null gefahren werden, und zwar in exakter Ausrichtung zum feststehenden Bauteil. Dabei einzuhaltende Genauigkeiten liegen in der Größenordnung von 0,1 mm. Diese Genauigkeit kann bei den vorhandenen Massen und Kräften nur sehr schwierig bzw. mit großem Aufwand eingehalten werden.

Zur Vermeidung der obigen Nachteile ist es aus dem Stand der Technik gemäß DE 10 2005 019 356 A1 bereits bekannt, zusätzlich zu den beiden miteinander zu verbindenden bzw. aneinander zu fügenden Bauteilen ein Fügeteil bereitzustellen, wobei die beiden miteinander zu verbindenden Bauteile und das Fügeteil derart zueinander ausgerichtet werden, dass das Fügeteil als Einsatz zwischen den beiden miteinander zu verbindenden Bauteilen angeordnet ist, und wobei die beiden Bauteile unter Zwischenanordnung des Fügeteils dadurch miteinander verbunden werden, dass das Fügeteil gegenüber den beiden miteinander zu verbindenden, stillstehenden Bauteilen zur Bereitstellung der Reibbewegung linear hin- und herbewegt bewegt wird, und dass insbesondere über beide stillstehenden Bauteile eine Stauchkraft auf die Fügezonen zwischen den beiden stillstehenden Bauteilen und dem Fügeteil ausgeübt wird. Bei diesem Verfahren muss demnach mindestens eines der miteinander zu verbindenden bzw. aneinander zu fügenden Bauteile zur Bereitstellung der Stauchkraft verlagert werden.

Hiervon ausgehend liegt der vorliegenden Erfindung das Problem zu Grunde, ein verbessertes Verfahren zum Fügen von Bauteilen zu schaffen. Dieses Problem wird durch ein Verfahren zum Fügen von Bauteilen gemäß Patentanspruch 1 gelöst. Erfindungsgemäß wird über das Fügeteil die Stauchkraft auf die Fügezonen zwischen den beiden stillstehenden Bauteilen und dem Fügeteil ausgeübt, nämlich in einer in etwa senkrecht zur Reibbewegung verlaufenden Richtung.

Beim erfindungsgemäßen Verfahren wird über das Fügeteil einerseits die zum linearen Reibschweißen erforderliche Reibbewegung und andererseits die erforderliche Stauchkraft bereitgestellt. Die beiden miteinander zu verbindenden bzw. aneinander zu fügenden Bauteile müssen demnach weder zur Bereitstellung der Reibbewegung noch zur Ausübung der Stauchkraft verlagert werden. Hierdurch kann gegenüber dem Stand der Technik die Genauigkeit des linearen Reibschweißens nochmals gesteigert werden.

Es wird ein Fügeteil mit mindestens einer gegenüber der Stauchkraftrichtung schräg verlaufenden Fügefläche verwendet. Vorzugsweise verlaufen beide Fügeflächen des Fügeteil gegenüber der Stauchkraftrichtung schräg, nämlich in Stauchkraftrichtung keilförmig zusammen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Ansicht von zwei im Sinne des erfindungsgemäßen Verfahrens miteinander zu verbindenden Bauteilen und eines Fügeteils; und
- Fig. 2:: eine gegenüber Fig. 1 um in etwa 90° gedrehte Ansicht.

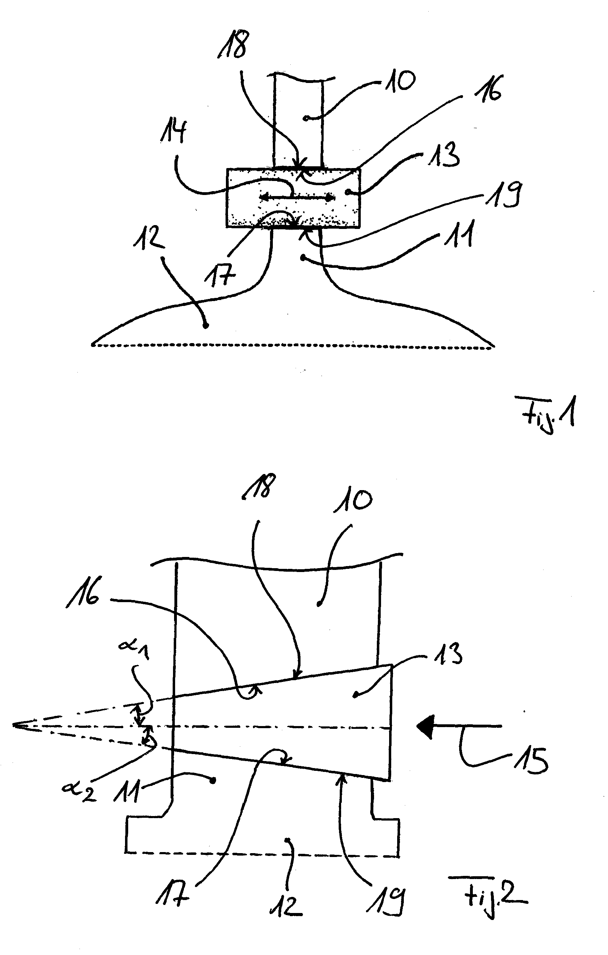

Die hier vorliegende Erfindung betrifft ein Verfahren zum Fügen von Bauteilen unter Verwendung des linearen Reibschweißens. Nachfolgend wird die Erfindung unter Bezugnahme auf Fig. 1 und 2 für den bevorzugten Anwendungsfall des erfindungsgemäßen Verfahrens beschrieben, bei welchem zur Herstellung oder Reparatur eines integral beschaufelten Gasturbinenrotors ein Schaufelblatt 10 einer Laufschaufel an einen Höcker 11 eines Rotorgrundkörpers 12 gefügt werden soll.

Beim erfindungsgemäßen Verfahren wird neben den beiden aneinander zu fügenden Bauteilen, also dem Schaufelblatt 10 der Laufschaufel und dem Rotorgrundkörper 12, weiterhin ein Fügeteil 13 bereitgestellt. Die beiden aneinander zu fügenden Bauteile sowie das Fügeteil 13 werden derart zueinander ausgerichtet, dass das Fügeteil 13 als Einsatz zwischen den beiden miteinander zu verbindenden Bauteilen, also dem Schaufelblatt 10 und dem Höcker 11 des Rotorgrundkörpers 12, angeordnet ist.

Die beiden Bauteile werden unter Zwischenanordnung des Fügeteils 13 miteinander verbunden, nämlich dadurch, dass das Fügeteil 13 im Sinne des Doppelpfeils 14 (siehe Fig. 1) zur Bereitstellung einer zum linearen Reibschweißen erforderlichen Reibbewegung linear hin-und herbewegt wird. Diese Reibbewegung erfolgt dabei gemäß Fig. 1 in etwa tangential zur Umfangsrichtung des Rotorgrundkörpers 12. Über das Fügeteil 13 wird weiterhin eine Stauchkraft in Richtung des Pfeils 15 (siehe Fig. 2) bereitgestellt, nämlich auf Fügezonen zwischen dem Fügeteil 13 und dem Schaufelblatt 10 sowie dem Höcker 11 ausgeübt. Gemäß Fig. 2 wird dabei die Stauchkraft 15 in einer in etwa senkrecht zur Reibbewegung (Pfeil 14) verlaufenden Richtung bereitgestellt, gemäß Fig. 2 in etwa in Axialrichtung des Rotorgrundkörpers 12.

Erfindungsgemäß verfügt das Fügeteil 13 über mindestens eine gegenüber der Stauchkraftrichtung (Pfeil 15) schräg verlaufende Fügefläche. Im gezeigten Ausführungsbeispiel sind beide Fügeflächen 16, 17 des Fügeteils 13 gegenüber der Stauchkraftrichtung schräg gestellt, wobei die beiden Fügeflächen 16, 17 des Fügeteils 13 in Stauchkraftrichtung (Pfeil 15) keilförmig aufeinander zu laufen.

Fügeflächen 18, 19 des Schaufelblatts 10 sowie des Höckers 11, die an die Fügeflächen 16, 17 des Fügeteils 13 angrenzen, sind ebenfalls gegenüber der Stauchkraftrichtung schräg gestellt.

Gemäß Fig. 2 schließt die Fügefläche 16 des Fügeteils 13 mit der Stauchkraftrichtung einen Winkel α₁ und die Fügefläche 17 des Fügeteils 13 mit der Stauchkraftrichtung einen Winkel α₂ ein. Die beiden Winkel α₁ und α₂ liegen dabei vorzugsweise in einem Bereich zwischen 15° und 45°. Die beiden Winkel α₁ und α₂ können entweder betragsmäßig gleich groß oder betragsmäßig unterschiedlich sein.

Das Fügeteil 13 verfügt gegenüber den beiden miteinander zu verbindenden Bauteilen über ein Aufmaß. Nach Durchführen des Reibschweißens erfolgt dann eine Nachbearbeitung durch Materialabtrag, um die gewünschte Endkontur herzustellen.

Bei Durchführung des erfindungsgemäßen Verfahrens werden demnach sowohl das Schaufelblatt 10 der Laufschaufel als auch der Rotorgrundkörper 12 und damit der Höcker 11 desselben ortsfest fixiert. Lediglich das Fügeteil 13 muss in Richtung des Doppelpfeils 14 zur Bereitstellung der Reibbewegung translatorisch hin- und herbewegt und anschließend zur Bereitstellung der Stauchkraft in Richtung des Pfeils 15 verlagert werden.

## Patentansprüche

1. Verfahren zum Fügen von Bauteilen, insbesondere zum Fügen einer Laufschaufel an einen Rotorgrundkörper bei der Herstellung und/oder Reparatur eines integral beschaufelten Gasturbinenrotors, wobei zwei miteinander zu verbindende bzw. aneinander zu fügende Bauteile und ein Fügeteil bereitgestellt werden, wobei die beiden miteinander zu verbindenden Bauteile und das Fügeteil derart zueinander ausgerichtet werden, dass das Fügeteil als Einsatz zwischen den beiden miteinander zu verbindenden Bauteilen angeordnet ist, und wobei die beiden Bauteile unter Zwischenanordnung des Fügeteils **dadurch** miteinander verbunden werden, dass das Fügeteil gegenüber den beiden miteinander zu verbindenden, stillstehenden Bauteilen zur Bereitstellung einer Reibbewegung linear hin- und herbewegt wird,
**dadurch gekennzeichnet,**
**dass** über das Fügeteil zusätzlich eine Stauchkraft auf die Fügezonen zwischen den beiden stillstehenden Bauteilen und dem Fügeteil ausgeübt wird, nämlich in einer in etwa senkrecht zur Reibbewegung verlaufenden Richtung.

2. Verfahren nach Anspruch 1,
**dadurch gekennzeichnet,**
**dass** ein Fügeteil mit mindestens einer gegenüber der Stauchkraftrichtung schräg verlaufenden Fügefläche verwendet wird.

3. Verfahren nach Anspruch 1,
**dadurch gekennzeichnet,**
**dass** ein Fügeteil mit zwei gegenüber der Stauchkraftrichtung schräg verlaufenden Fügeflächen verwendet wird.

4. Verfahren nach einem der Ansprüche 1 bis 3,
**dadurch gekennzeichnet,**
**dass** die Fügeflächen des Fügeteils in Stauchkraftrichtung keilförmig aufeinander zulaufen.

5. Verfahren nach einem der Ansprüche 1 bis 4,
**dadurch gekennzeichnet,**
**dass** die Fügeflächen des Fügeteils in Stauchkraftrichtung mit betragsmäßig unterschiedlichen Winkeln schräggestellt sind.

6. Verfahren nach einem der Ansprüche 1 bis 4,
**dadurch gekennzeichnet,**
**dass** die Fügeflächen des Fügeteils in Stauchkraftrichtung mit betragsmäßig gleichen Winkeln schräggestellt sind.

7. Verfahren nach einem der Ansprüche 1 bis 6,
**dadurch gekennzeichnet,**
**dass** die schräg verlaufenden Fügeflächen des Fügeteils mit der Stauchkraftrichtung einen Winkel zwischen 15° und 45° einschließen.

8. Verfahren nach einem oder mehreren der Ansprüche 1 bis 7,
**dadurch gekennzeichnet,**
**dass** bei der Herstellung und/oder Reparatur eines integral beschaufelten Gasturbinenrotors als miteinander zu verbindenden Bauteile ein Schaufelblatt und ein Rotorgrundkörper bereitgestellt werden,
wobei das Fügeteil gegenüber dem Rotorgrundkörper sowie dem Schaufelblatt in einer Richtung translatorisch bzw. linear hin- und herbewegt, die in etwa tangential zur Umfangsrichtung des Rotorgrundkörpers verläuft, und dass die Stauchkraftrichtung in etwa in Axialrichtung des Rotorgrundkörpers über das Fügeteil bereitgestellt wird.
